# EUROPEAN PATENT SPECIFICATION

(11) **EP 1 492 296 B1**
(45) Date of publication and mention of the grant of the patent: **25.04.2007**
(21) Application number: 03076977.2
(22) Date of filing: 26.06.2003
(51) Int. Cl.: H04L 29/06, H04L 12/46

(54) **Apparatus and method for a single a sign-on authentication through a non-trusted access network**
Apparat und Methode für eine Authentisierung mit einmaliger Passworteingabe über einen unsicheren Netzwerkzugang
Appareil et méthode pour réaliser une seule authentification en début de session, à travers un réseau d'accès incertain

(43) Date of publication of application: 29.12.2004
(73) Proprietor: TELEFONAKTIEBOLAGET LM ERICSSON (publ), 164 83 Stockholm (SE)
(72) Inventor: Ramos Robles, Luis, 28028 Madrid (ES); Barriga, Luis, 12833 Skarpnäck (SE)
(74) Representative: Elzaburu Marquez, Alberto

(56) References cited:
- WO-A-01/72009
- US-B1- 6 253 327
- US-B1- 6 571 289

## Description

### FIELD OF THE INVENTION

The present invention generally relates to Single Sign-On services for a plurality of users accessing a service network via a non-trusted access network. More particularly, the invention relates to a telecommunication apparatus, user equipment and method for Single Sign-On authentication purposes when the access network does not provide data origin authentication.

### BACKGROUND

Single Sign-On (hereinafter SSO) is an emerging principle that enables users to access different services without explicitly authenticating such users for each particular different service. The support of this principle implies that a user is authenticated only once at a given Identity Provider (hereinafter IdP) entity, and the resulting authentication is valid for entrance to other services or Service Providers (SP). In other words, the purpose of SSO is to allow users to securely access different services and applications, without being authenticated and authorised every time.

Basically, there are two approaches for supporting SSO, namely a so-called terminal-centric approach and a so-called network-centric approach.

Under the terminal-centric approach, the user's terminal is the one that supports the different authentication mechanisms necessary to access the different services. For example, the terminal stores the different passwords instead of the user itself. In this respect, this approach still puts the burden of supporting different authentication mechanisms on the user or terminal side. Moreover, the user needs to register itself to every entity playing the role of Service Provider (SP), so that every said entity has the necessary information about the user like, for example, user identity and password, address for mail deliveries, contact information, payment mode, etc.

Under the network-centric approach, a user is just authenticated towards one central entity, which plays the role of Identity Provider (IdP) for said user. When the user wants to access a given service, the corresponding Service Provider (SP) does not require a new authentication. Instead, the Service Provider (SP) is presented one or more service credentials from the Identity Provider (IdP), thus stating that the user has been authenticated and providing the necessary information about the user. Of course, this mechanism requires a business relation between the SP and the IdP.

A special case is when the same entity, for example a Mobile Network Operator (hereinafter MNO), controls the access authentication and, at the same time, assumes the role of IdP. For instance, the user performs an authentication with the Core Network (CN) in order to gain access to the network, such as during a General Packet Radio Service (GPRS) authentication or Circuit Switched authentication, and the IdP relies on this authentication so that a new authentication towards the IdP is not needed, provided that the IdP has the means to obtain that information from the CN.

Under this special case, the Identity Provider (IdP) can only rely on the Core Network (CN) authentication if the Access Network, which the user is accessing through, provides data origin authentication. This is the case, for example, when the user is accessing through a GPRS access network.

In this context, data origin authentication means that for any data received from the Access Network, and whichever the originator is, the claimed originator of said data can be considered authentic.

However, other access networks, such as a Wireless Local Area Network (WLAN), do not provide data origin authentication, thus precluding the re-utilisation of the original authentication performed when accessing the network for SSO authentication purposes, or in other words, precluding the re-utilisation of the access authentication for SSO purposes.

Conventionally in the mobile world, the SSO principle implies that once a user has performed a Core Network (CN) authentication, such user gets access to services in a variety of networks without a further explicit authentication by virtue of a Single Sign-On (SSO) support, and wherein the Home Network holding a user's subscription assumes the role of IdP for such user. Generally speaking, a user may be authenticated by the user's Home Core Network where the user holds a subscription, or by a Visited Core Network where the user is roaming. For the sake of simplicity, the present description refers hereinafter to a Core Network authentication regardless whether the home or the visited network was the one authenticating the user. In this context, data origin authentication is ensured since it relies on the fact that the Core Network (CN) of the Mobile Network Operator is a trusted network, and thus a mobile station (or user equipment, or user terminal side), having an IP addresses assigned by said CN, can be identified via said trusted IP address. Any data originated at the mobile station can be considered authentic. Furthermore, said IP address can be considered as the user's pseudo-identity during the period said IP address is allocated to the user's mobile station. This principle is used under an SSO approach to obtain other user's identities, such as the mobile subscriber directory number (hereinafter MSISDN).

Nowadays, there are two main business models regarding Single Sign-On. The first one is the so-called Walled-Garden SSO and refers to the usage of SSO for services that are offered by the same entity that offers SSO, namely Local Services throughout this description. There are no open specifications, or standard technology, supporting this business model.

Another well-know model is the so-called Federated SSO, wherein the SSO service is provided by an Identity Provider (IdP), whereas the services are provided by one or more Service Providers (SP), namely External Services throughout this description. The industry forum known as Liberty Alliance Project (LAP) has developed a set of protocols to allow scenarios supporting the so-called Federated SSO. LAP does not specify any particular authentication mechanism, but just how the authentication result may be transferred from an Identity Provider (IdP) to a Service Provider (SP), the latter finally serving services to end users. LAP, however, does not suggest how an IdP works when the user is accessing through a non-trusted access network.

When a Mobile Network Operator (MNO) assumes both roles, Core Network (CN) authentication provider and Identity Provider (IdP), in the above scenarios for Single Sign-On (SSO), the Walled Garden and the Federated SSO scenarios, and provided that the Access Network provides data origin authentication, a user just performs an access authentication and once this step has been accomplished, SSO can be used to gain access to a number of services without any new authentication process.

For example, provided that the access network is a GPRS network, once a GPRS authentication has been performed successfully, the entity playing the role of Identity Provider (IdP) has assurance that any request for service credentials received from a user with a given IP address comes indeed from that user, and not from an attacker performing IP spoofing. Thereby, the IdP can provide the requested service credentials to the user without performing any extra authentication. In line with this exemplary scenario, US-6253327 discloses an apparatus and method for a user being assigned with an IP address once authenticated by a network, this IP address being used as a proof of being authenticated through a negotiated point-to-point protocol session, thus eliminating needs for further authentications when the user accesses public or private network areas. This is an acceptable solution when the access network provides data origin authentication such as a point-to-point protocol session allows.

However, the current state of art does not offer a safe solution for Single Sign-On authentication when the Access Network does not provide data origin authentication, since the given IP address identifying the user is not under control of the Mobile Network Operator (MNO) and might be in use by an attacker performing IP spoofing. In this respect, the use of a tunnelling mechanism through a secure gateway for authenticating a user accessing a private network, with addition and strip off IP addresses for network entities in the private network and binding functions to associate the origin of a request with the destination of a corresponding response, in order to avoid a direct access from the access network to the private network, as shown in US-6571289, is not helpful when the access network does not provide data origin authentication, and does not preclude intrusions from an attacker user performing IP spoofing.

Therefore, the present invention is aimed to overcome this limitation in such a manner that a Mobile Network Operator (MNO) providing access through an Access Network not able to provide data origin authentication, such as WLAN, can re-utilise the original access authentication for SSO. Moreover, the present invention is addressed to overcome this limitation, at least, under a network-centric approach.

### SUMMARY OF THE INVENTION

The above aim is accomplished in accordance with the present invention by the provision of the apparatus of claim 1, the user's equipment of claim 14, and the method of claim 18, all intended to provide Single Sign-On services for a user who is accessing a service network through an access network which does not provide data origin authentication, by re-utilisation of the original access authentication carried out with the Core Network. Apparatus, user's equipment, and method thus forming a single inventive concept.

The apparatus in accordance with the invention is arranged for receiving a Single Sign-On service request in a telecommunication service network from a user, via an access network that does not provide data origin authentication, whereas the user had received access credentials as a result of having been authenticated by the Core Network. This apparatus comprises:
- means for establishing a secure tunnel with the user through the access network by using an outer IP address assigned by said access network;
- means for checking the validity of access credentials received from the user during the establishment of the secure tunnel;
- means for establishing a valid session with the user upon successful validity check of access credentials;
- means for assigning an internal IP address to be used as inner IP address within the secure tunnel; and
- means for linking session data, access credentials and assigned internal IP address for the user.

The apparatus is preferably arranged with means for generating service credentials usable for the user accessing certain services requiring specific authorisation evidences. Additionally, these means are arranged to generate service credentials on a per service basis for the user and upon service request.

Given that the access credentials provided to the service network might be signed or not, the apparatus is preferably provided with means for communicating with an Authentication Server of the home network in order to check the validity of the access credentials received from the user, when said access credentials are not signed by a recognised authentication entity.

The apparatus may be advantageously implemented with different components, wherein the means for establishing the secure tunnel with a user are included in a first device named Secure Service Entry Point, and the means for linking session data, access credentials and assigned internal IP address for the user are included in a second device named Single Sign-On server. Under this approach, the apparatus further comprises means for communicating said first and second devices, namely the Secure Service Entry Point with the Single Sign On Server.

On the other hand, given that the service network where the user accesses may be different than the home network where the user holds a subscription, the apparatus of the present invention preferably comprises means for an additional co-ordination with an Identity Provider in charge of said user in the home network. Said means for additional co-ordination are preferably located at the Single Sign On Server, though they may be alternatively located at the Secure Service Entry Point as well.

In operation, for an exemplary use when the user is accessing a local HTTP service, or an external service in a network different than the currently accessed service network, the apparatus includes means for checking whether the user had been previously authenticated or not. Therefore, the apparatus may be provided with means for communicating with an intermediate entity arranged to intercept the user's access to the HTTP local service, or to the external service in an external network. In particular, this intermediate entity may be an HTTP-proxy, or a general purpose firewall arranged to this end.

In operation for an other exemplary use when the user is accessing a non-HTTP local service, the apparatus also includes means for checking whether the user had been previously authenticated or not. However, under this approach there may be not so appreciable advantages on having an intermediate entity interposed between the user and the service, being said means for checking shared between the service and the apparatus itself. In respect of these two exemplary uses, the fact of being an HTTP service or a non-HTTP service does not determine the advantages or drawbacks of having the intermediate entity, but rather show different configurations that are compatible with the apparatus of the present invention.

The user equipment in accordance with the invention is arranged to carry out an authentication procedure with a core network, and includes means for establishing a secure tunnel with a service network, through an access network not providing data origin authentication, wherein the secure tunnel makes use of an outer IP address assigned by said access network, and the user equipment also includes:
- means for obtaining access credentials as a result of being authenticated by the core network; and
- means for linking said access credentials with the secure tunnel.

The user equipment advantageously includes means for linking an internal IP address, which is received as an inner IP address within the tunnelled traffic, with the access credentials and with the secure tunnel. This way, further accesses to particular services may easily encounter at the user equipment the previously assigned IP address as a pseudo-identity to directly access said particular services.

Even though different mechanisms may be used to obtain access credentials, additional security advantages are envisaged by providing a user equipment wherein the means for obtaining access credentials includes:
- means for receiving an authentication challenge from the core network;
- means for generating and returning an authentication response to the core network;
- means for generating a public and private key pair; and
- means for submitting the public key along with a digital signature proving the ownership of the private key towards the core network.

Alternatively, in a simplified user equipment and core network, the means for obtaining access credentials at the user equipment includes:
- means for receiving an authentication challenge from the core network;
- means for generating and returning an authentication response to the core network; and
- means for requesting a digital certificate obtainable from the core network.

There is also provided, in accordance with the invention, a method for supporting Single Sign-On services in a telecommunication service network for a user accessing said service network through an access network unable to provide data origin authentication, the user authenticated by a core network, and the method comprising the steps of:
- providing access credentials to the user equipment side as a result of having been authenticated by the core network;
- establishing a secure tunnel between the user equipment side and an entity of the service network through the access network by using an outer IP address assigned by said access network;
- linking said access credentials with said secure tunnel at the user equipment side;
- checking the validity of the access credentials received at the service network from the user equipment side during the establishment of the secure tunnel;
- establishing a valid session with the user upon successful validity check of the access credentials;
- assigning at the service network an internal IP address for the user to be used as inner IP address within the tunnelled traffic; and
- linking session data, access credentials and assigned internal IP address for the user at an entity of the service network.

Advantageously, and aligned with a preferred corresponding feature at the user's equipment, the method further comprises a step of linking an internal IP address received as an inner IP address within the tunnelled traffic with the access credentials and with the secure tunnel at the user equipment side.

The method, also aligned with preferred corresponding features in the above apparatus, further comprises a step of generating service credentials for the user. This step may additionally include a step of generating service credentials on a per service basis for the user upon service request.

Preferably, the step of checking the validity of access credentials received from the user at the service network further includes a step of communicating with an Authentication Server of the home network, when said access credentials are not signed by a recognised authentication entity.

On the other hand, and depending on the particular configuration that the apparatus is given in accordance with the invention, the method may further include a step of communicating a first device named Secure Service Entry Point, in charge of the secure tunnel, with a second device named Single Sign On Server (N-42) where the step of linking session data, access credentials and assigned internal IP address for the user takes places.

In an exemplary use, when the user is accessing to a local service, or to an external service in a network different than the currently accessed service network, the method further includes means for checking whether the user had been previously authenticated or not.

### BRIEF DESCRIPTION OF DRAWINGS

The features, objects and advantages of the invention will become apparent by reading this description in conjunction with the accompanying drawings, in which:

**FIG. 1** shows a basic overview of a known architecture for an access control based on an Extensible Authentication Protocol.

**FIG. 2** illustrates an overview of an exemplary architecture and interfaces, focusing on entities and interfaces involved when the user is authenticated by the user's home network, and is further accessing a service network, via an access network not providing data origin authentication, the service network re-utilising the access authentication.

**FIG. 3** shows a flow sequence describing a currently preferred embodiment for a user to obtain access credentials as a result of being authenticated by the user's home core network.

**Fig. 4** shows a first overview of the exemplary architecture and interfaces shown in Fig. 2, focusing on a preferred operation when the user is accessing a local HTTP service.

**Fig. 5** shows a second overview of the exemplary architecture and interfaces shown in Fig. 2, focusing on a preferred operation when the user is accessing a local non-HTTP service, or a local HTTP service without help of any intermediate entity such as an HTTP-proxy or firewall.

**Fig. 6** shows a third overview of the exemplary architecture and interfaces shown in Fig. 2, focusing on a preferred operation when the user is accessing an external service in a network different than the currently accessed service network.

### DETAILED DESCRIPTION OF PREFERRED EMBODIMENTS

The following describes currently preferred embodiments of an apparatus, user equipment and method for offering a user the possibility to gain Single Sign-On (SSO) services when accessing through an Access Network not providing data origin authentication, such as when accessing through a Wireless Local Area Network (WLAN).

The present invention presents several aspects in connection with the user equipment, with the visited service network, which in particular may be the home service network, and with the establishment of a secure tunnel between said user terminal and said visited service network through an Access Network not providing data origin authentication.

In accordance with a first aspect of the present invention, there is provided a new mechanism for obtaining at the user terminal side (N-10) authentication or access credentials from the core network (N-30) during the Core Network authentication process, and for linking at the user terminal side (N-10) said authentication or access credentials with a particular secure tunnel (S-24) towards a service network (N-40), which in particular might be a home service network or a visited service network. For the sake of clarity and simplicity, an authentication or access credential is hereinafter referred to as an "access credential".

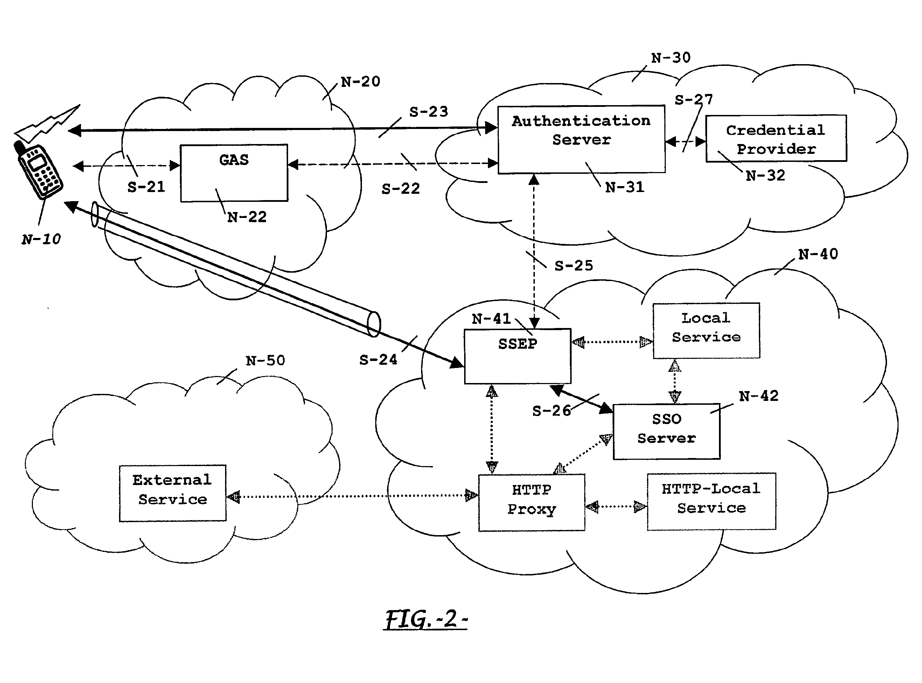

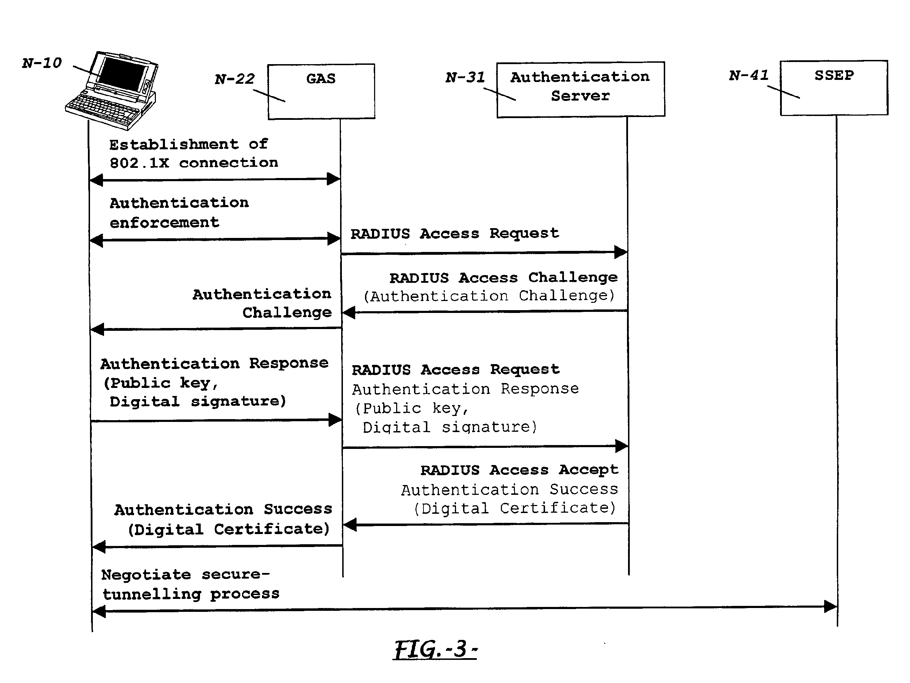

Therefore, as illustrated in Fig. 2 and sequenced in Fig. 3, enforcement of access authentication is done by a Generic Access Server (hereinafter GAS) (N-22) in the Access Network (N-20), though the authentication itself is performed end-to-end between the user (N-10) and an Authentication Server (N-31) placed in the Core Network (N-30), using an Extensible Authentication Protocol framework (hereinafter EAP, in accordance with IETF RFC 2284). The Extensible Authentication Protocol provides an authentication framework arranged to support multiple authentication mechanisms. To date, EAP has been implemented with hosts and routers that connect each other via switched circuits, or dial-up lines, using a Point-to-Point Protocol (PPP). Moreover, EAP has been also implemented with switches accordingly with an IEEE802 standard such as 802.1X-2001, for instance, wherein EAP messages are encapsulated.

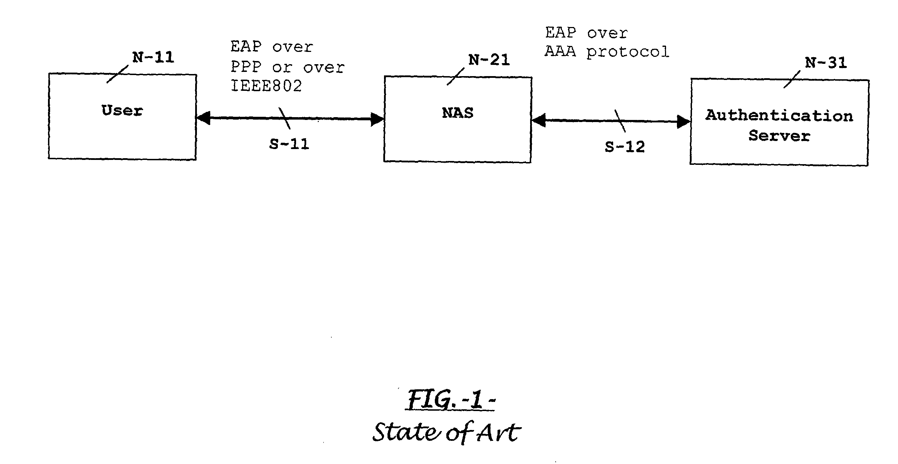

One advantage of the EAP architecture is its flexibility. For example, a Network Access Server (N-21) (generally known a NAS) like the one shown in Fig. 1, which is connected via EAP over PPP or over IEEE802 protocol to a user (N-11) requiring authentication before being granted access to the network, may authenticate local users while at the same time being acting as a pass-through entity for non-local users as well as for those authentication methods not locally implemented at the NAS.

Thus, in a currently preferred embodiment illustrated in Fig. 2, a user (N-10) tries to get access to the network. A PPP or IEEE 802-based connection (S-21) is established between the client and the GAS (N-22) in the Access Network (N-20). The GAS enforces authentication by communicating with an Authentication Server (N-31) in the Core Network (N-30) using an "Authentication, Authorisation and Accounting" (hereinafter AAA) suitable protocol (S-22), and acts as a pass-through for EAP messages.

A conventionally suitable AAA protocol (S-12; S-22) may be a Remote Authentication Dial In User Service (hereinafter RADIUS, in accordance with IETF RFC 2865) protocol that makes use of a client/server model for carrying authentication, authorisation, and configuration information between a Network Access Server (NAS) (N-21; N-22) and an Authentication Server (N-31) as Fig. 1 illustrates. Typically, providers of connectivity to telecommunication networks make use of RADIUS in order to verify the identity of their users. Therefore, a user dials a well-known phone number and the modems on both ends, user and connectivity provider, establish a connection. The modems in the server side are connected to a Network Access Server (NAS), which requires the user to authenticate before granting access to the network by asking (S-11) for a login name and password. The Network Access Server (NAS) (N-21; N-22) uses the RADIUS protocol to communicate (S-12) over the network with a RADIUS server (N-31) that collects the information forwarded from the NAS about the user, such as login name and password, to authenticate the user. The authentication process may require or not that the RADIUS server sends a number of challenges to the NAS, which the user should be able to respond for. As a result of the authentication process, the RADIUS server (N-31) indicates to the NAS (N-21; N-22) whether or not the user (N-10; N-11) is permitted to access the network. Another AAA protocol suitable for use may be DIAMETER, which is an evolution of RADIUS.

Then, as illustrated in Fig. 2, an EAP authentication is carried out (S-23) end-to-end between the user (N-10) and the Authentication Server (N-31) through a Generic Access Server (N-22) of the Access Network (N-20), which in particular might be the Network Access Server (N-21) of Fig. 1, for example.

During this EAP authentication process illustrated in Fig. 2, one or several access credentials are distributed, or agreed on, particularly between the user (N-10) and the Home Network (N-30) or, more generally, between the user and the Core Network, regardless whether the Core Network authenticating the user is the home or a visited network.

These access credentials are further used to set up a secure tunnel (S-24) between the user (N-10) and a Service Network (N-40) that may be a Home or a Visited network. This secure tunnel (S-24), namely a secure communication channel, must provide at least data origin authentication, or a functional equivalence thereof, as aimed by this first aspect of the present invention.

Different mechanisms for distributing or agreeing on access credentials might be appropriate for the purpose of the present invention inasmuch as they can be validly used for being linked or associated with a secure tunnel.

Nevertheless, in accordance with a nowadays preferred embodiment, there is provided a new mechanism for obtaining short-lived certificates suitable for the purpose of the present invention as Fig. 3 illustrates.

In this flow sequence, when an authentication challenge has been received at the user terminal side (N-10), and in addition to generating the authentication response, a public and private key pair is generated. The public key along with a digital signature proving the ownership of the private key are sent together with the authentication response towards the Authentication Server (N-31) in the Core Network.

Then, upon successful authentication of the user, the received digital signature is checked and, if it is correct, a short-lived digital certificate is generated for the user's public key. This certificate is returned from the Authentication server (N-31) to the user's terminal side (N-10) together with a message indicating a successful authentication.

Alternatively to the user's terminal side generating a public and private key pair and not illustrated in any drawing, the user's terminal side (N-10) may simply generate a request for a digital certificate to be submitted with the authentication challenge's response.

The short-lived digital certificate thus obtained by virtue of this preferred embodiment, or another, is a sort of access credential to be linked at the user's terminal side with a secure tunnel in accordance with this first aspect of the present invention.

Nevertheless, different mechanisms can be used to obtain access credentials from the Core network valid for the purpose of the present invention. One possibility, shown in the preferred embodiment of Fig. 2, is that the access credentials, like the above short-lived certificate, are distributed to the user (N-10) from the Authentication Server (N-31), which in turn may obtain them from a separate Credential Provider (N-32). Another possibility is that the Authentication Server (N-31) itself generates such access credentials. The access credentials may be electronically signed by the Authentication Server (N-31) or by the Credential Provider (N-32). An alternative embodiment is that some cryptographic material is derived at both the Authentication Server (N-31) and the user equipment (N-10), and subsequently used as an access credential. In the latter case, it is not necessary to distribute the access credentials from the Authentication Server towards the user, but then the resulting access credentials would not be signed by the Core Network (N-30).

Back to Fig. 2, the access credentials obtained from the Core Network (N-30) during the access authentication are used to set up a secure tunnel (S-24) between the user (N-10) and an entity (N-41) in the home or visited Service Network (N-40), named Secure Service Entry Point (hereinafter SSEP) in the instant specification. If the access credentials are not signed by the Core Network, then a communication channel (S-25) is preferably needed between the SSEP (N-41) and the Authentication Server (N-31), so that the SSEP can check with the Authentication Server whether the access credentials provided by the user (N-10) are acceptable. On the other hand, provided that the access credentials are signed, the SSEP (N-41) is preferably arranged to accept them as valid access credentials signed by the Authentication Server (N-31) or by the Credential Provider (N-32). In any case, the secure communication channel (S-24) between the user (N-10) and the SSEP (N-41) must provide at least data origin authentication. This way, all traffic received over this secure communication channel can be assumed to come from the claimed user and not from an attacker masquerading the user.

In accordance with a second aspect of the present invention, there is provided a new mechanism at an entity of a home or visited service network for maintaining session information associated to the user and for linking said session information with the establishment and tear-down of the secure tunnel. This entity is preferably a Single Sign-On (SSO) Server (N-42) in co-operation with the above Secure Service Entry Point (SSEP) (N-41), in a currently preferred embodiment, though it may also be either one of them solely. In this way, when the user (N-10) further attempts to access a service over the secure communication channel (S-24), and in order to provide the user with Single Sign-On support, service credentials are requested to the SSO Server (N-42) from the user (N-10), or from the service itself, or from an entity co-operating with the service to this end. The SSO Server (N-42) has assurance that such request for service credentials for said user (N-10) comes indeed from the attempting of said user to access such service, and not from an attacker masquerading the user. Therefore, the SSO Server (N-42) can provide the requested service credentials to the requester without performing any extra authentication.

Therefore, and still with reference to Fig. 2, the SSEP exchanges information (S-26) with the SSO Server (N-42), in order to assign an IP address to the user, for being used in the tunnelled traffic. This IP address may belong to a pool of IP addresses handled by the Service Network. Then, the SSEP (N-41) lets the SSO Server (N-42) know that said user (N-10) has established a session.

Once this has been accomplished, that is, the IP address assigned to the user has been linked with the user access credentials and with the corresponding session information, the SSO Server (N-42) can have assurance that further requests for service credentials received with said internal IP address come indeed from the corresponding user.

Provided that the user had established the secure communication channel with a Visited Service Network, the SSO Server needs an additional co-ordination with the Identity Provider (IdP) in charge of said user, namely with an entity of the Home Service Network playing the role of IdP, not shown in any drawing. For the sake of simplicity, the explanation hereafter assumes that the user has connected to the Home Service Network, which plays the role of user's IdP.

The user can at this stage enjoy the Single Sign-On (SSO) services at his or her convenience, even when having accessed through an Access Network not able to provide data origin authentication. In particular, the user (N-10) may be operating under any of the business models commented above, namely under the Walled-Garden model or under the Federated Single-Sign-On model, in accordance with nowadays preferred respective embodiments described following this.

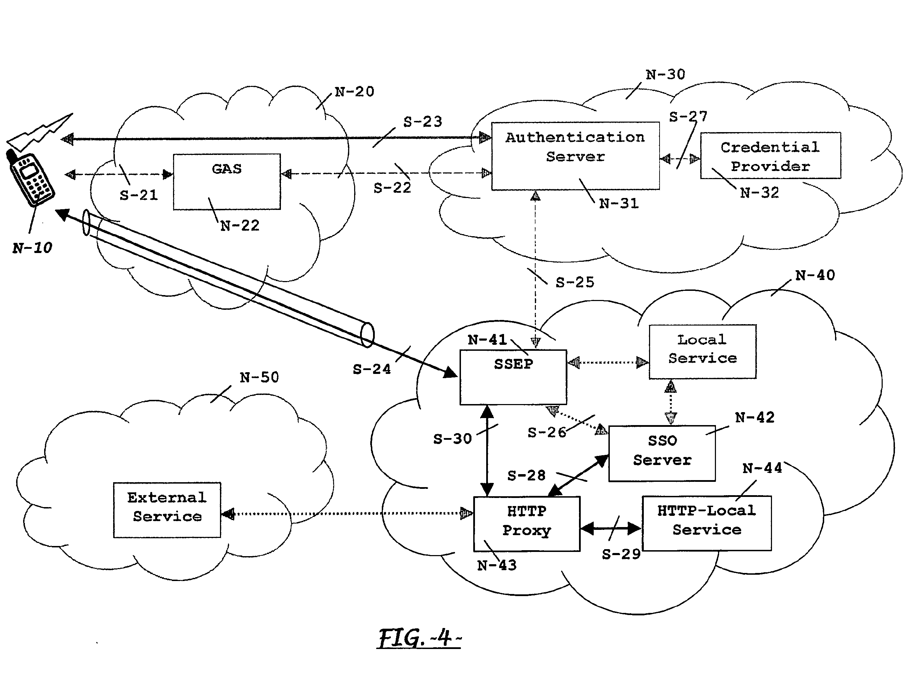

In a first embodiment, under a Walled-Garden scenario illustrated in Fig. 4, when the user accesses an HTTP local service (N-44), an intermediate node (N-43) intercepts the access (S-30, S-29) to the HTTP local service. This intermediate node (N-43), which is preferably an HTTP-Proxy though a general purpose firewall might be arranged to this end as well, queries (S-28) the SSO Server (N-42) on whether the user had been previously authenticated or not. A pseudo-identity to identify the user in this case is the previously assigned IP address that ensures data origin authentication. The SSO Server (N-42) receiving such query checks that there is an active session tagged with said IP address, and sends an acknowledgement or, rather, a service credential to the HTTP-proxy (N-43), the latter allowing the user's (N-10) access to the HTTP local service (N-44) and, optionally, allocating a cookie into the user's terminal browser. This cookie, if provided, may be further used to identify the user (N-10) without needing further checks with the SSO Server (N-42) in subsequent requests for HTTP-services.

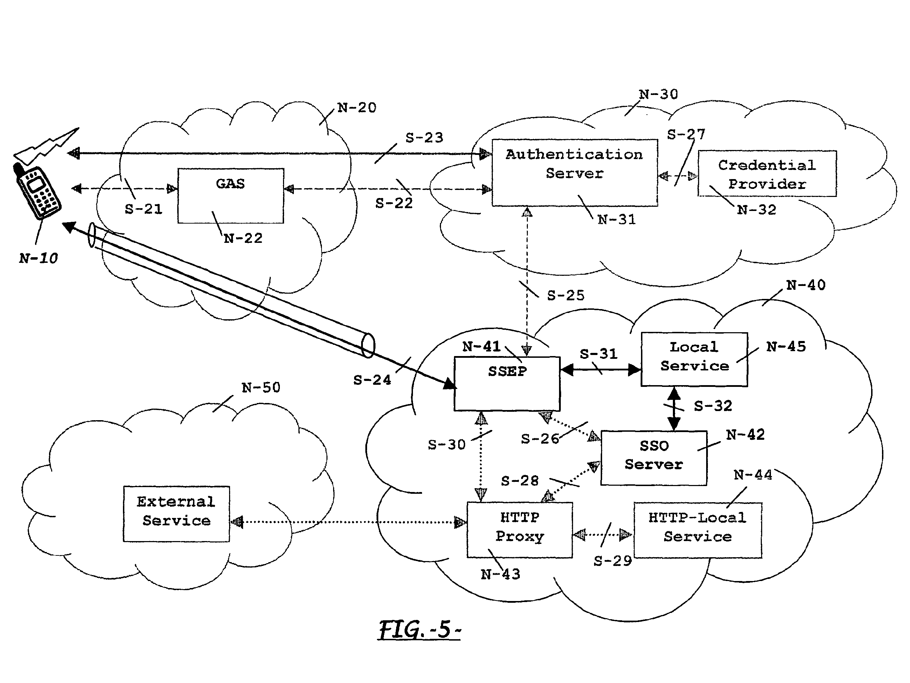

In a second embodiment, under a Walled-Garden scenario illustrated in Fig. 5, when the user accesses to non-HTTP services (N-45) or, more generally speaking, when the user access a Local Service (N-45) not requiring the above HTTP-proxy, the Local Service (N-45) may be directly accessed (S-24, S-31) from the user terminal side (N-10), likely through the SSEP (N-41). The requested local service (N-45) makes use of the previously assigned IP address as a pseudo-identity to directly query (S-32) the SSO Server (N-42) on whether the user had been previously authenticated. The SSO Server (N-42) receiving such query checks that there is an active session tagged with said IP address, and sends an acknowledgement or, rather, a service credential to the Local Service (N-45) for allowing the user's (N-10) access.

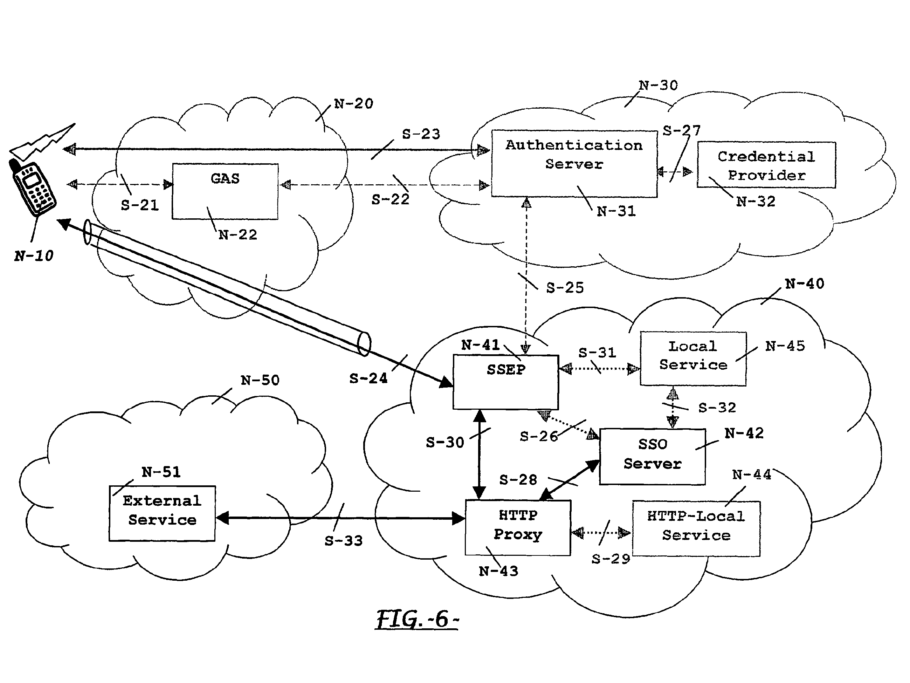

In a third embodiment, under a Federated SSO scenario illustrated in Fig. 6, the user (N-10) attempts to access an external service (N-51) and, accordingly with the LAP protocols, the user's browser (N-10) is redirected (S-30, S-33) to a 3^{rd} party SP (N-51), namely an external service. Then, the 3^{rd} party SP (N-51) requests (S-33, S-28) a service authorisation to the SSO Server (N-42) with a given IP address that had been previously assigned when the user provided the access credentials. The SSO Server (N-42) checks under SSO premises the authentication and authorisation status for the user assigned with said given IP address as pseudo-identifier and, then, returns a service credential that may be used to sign-on to the requested 3^{rd} party SP. The SSO Server might as well allocate a cookie as for the above first embodiment.

Eventually, when a user tears-down the secure tunnel, the SSEP communicates with the SSO Server in order to de-allocate the internal IP address, and to delete the user related session information in the SSO Server.

The invention is described above in respect of several embodiments in an illustrative and non-restrictive manner. Obviously, modifications and variations of this embodiments are possible in light of the above teachings, and any modification of the embodiments that fall within the scope of the claims is intended to be included therein.

## Claims

1. An apparatus (N-41, N-42) arranged for receiving a Single Sign-On service request in a telecommunication service network (N-40) from a user (N-10) via an access network (N-20) unable to provide data origin authentication, the user (N-10) having received (S-23) access credentials as a result of being authenticated by a core network (N-30), the apparatus comprising:
- means for receiving (S-24) the access credentials from the user (N-10) through the access network (N-20);
- means for checking (N-41; S-25, N-31) validity of the access credentials received from the user (N-10);
- means for establishing a valid session with the user (N-10) upon successful validity check of the access credentials;
- means for assigning an internal IP address to identify the user in the service network (N-40); and
- means for linking (N-41, S-26, N-42) session data, access credentials and assigned internal IP address for the user (N-10);
- means for establishing a secure tunnel (S-24) with the user (N-10) when receiving the access credentials through the access network (N-20) by using an outer IP address assigned to the user by the access network for addressing the user, and by using the internal IP address assigned to identify the user in the service network (N-40) as an inner IP address in the tunnelled traffic.

2. The apparatus of claim 1, further comprising means for generating service credentials (N-41, S-26, N-42) for authorizing the user to access a service in the service network (N-40).

3. The apparatus of claim 2, wherein the service credentials are generated (N-41, S-26, N-42) on a per service basis for the user upon service request.

4. The apparatus of claim 1, further comprising means for communicating (S-25) with an Authentication Server (N-31) of the home network (N-30) in order to check the validity of the access credentials received from the user (N-10), when said access credentials are not signed by a recognised authentication entity (N-31).

5. The apparatus of claim 1, wherein the means for establishing the secure tunnel (S-24) with the user (N-10) are included in a first device named Secure Service Entry Point (N-41), and the means for linking session data, access credentials and assigned internal IP address for the user (N-10) are included in a second device named Single Sign-On server (N-42).

6. The apparatus of claim 5, further comprising means for communicating (S-26) the Secure Service Entry Point (N-41) with the Single Sign On Server (N-42).

7. The apparatus of claim 1, further comprising means for an additional co-ordination (S-25) between the apparatus (N-41; N-42) and an Identity Provider (N-31) in charge of said user in a home network (N-30) when said home network is different than the service network (N-40) which the apparatus is the entry point for.

8. The apparatus of claim 1 for use when the user (N-10) is accessing a local HTTP service (N-44), or an external service (N-51) in a network (N-50) different than the currently accessed service network (N-40), the apparatus having means for checking (N-41, S-30, N-43, S-28, N-42) whether the user had been previously authenticated or not.

9. The apparatus of claim 8, having means (S-30, S-28) for communicating with an intermediate entity (N-43) arranged to intercept the user's access (S-29) to the HTTP local service (N-44), or to the external service (N-51) in an external network (N-50).

10. The apparatus of claim 9, wherein the intermediate entity (N-43) is an HTTP-proxy.

11. The apparatus of claim 9, wherein the intermediate entity (N-43) is a firewall.

12. The apparatus of claim 1 for use when the user (N-10) is accessing a non-HTTP local service (N-45), having means for checking (N-41, S-31, N-45, S-32, N-42) whether the user had been previously authenticated or not.

13. The apparatus of claim 1, wherein the means for receiving access credentials comprises means for checking whether a digital certificate issued by the core network is present to indicate a successful authentication of the user.

14. A user equipment (N-10; N-11) arranged to carry out an authentication procedure with a core network (N-30), and arranged to access a telecommunication service network (N-40) via an access network (N-20) unable to provide data origin authentication, the user equipment (N-10; N-11) comprising:
- means for obtaining (S-23) access credentials as a result of being authenticated by the core network (N-30);
- means for sending (S-24) the access credentials towards the service network (N-40) when accessing through the access network (N-20)
- means for establishing a secure tunnel (S-24) with the service network (N-40) through the access network (N-20), the secure tunnel making use of an outer IP address assigned to the user by the access network for addressing the user;
- means for receiving (S-24) an internal IP address assigned by the service network (N-40) and included as an inner IP address within the tunnelled traffic to identify the user in the service network; and
- means for linking said access credentials with the inner IP address and with the secure tunnel.

15. The user equipment (N-10; N-11) of claim 14, wherein the means for obtaining access credentials includes:
- means for receiving an authentication challenge from the core network;
- means for generating and returning an authentication response to the core network;
- means for generating a public and private key pair; and
- means for submitting the public key along with a digital signature proving the ownership of the private key towards the core network.

16. The user equipment (N-10; N-11) of claim 14, wherein the means for obtaining access credentials includes:
- means for receiving an authentication challenge from the core network;
- means for generating and returning an authentication response to the core network; and
- means for requesting a digital certificate obtainable from the core network.

17. The user equipment (N-10; N-11) of claim 16, wherein the means for obtaining access credentials further includes means for generating a public key for which the digital certificate is obtainable.

18. A method for supporting Single Sign-On services in a telecommunication service network (N-40) for a user (N-10) accessing said service network (N-40) through an access network (N-20) unable to provide data origin authentication, the user (N-10) having received (S-23) access credentials as a result of being authenticated by a core network (N-30), the method comprising the steps of:
- receiving (S-24) at the service network (N-40) the access credentials from the user (N-10) through the access network (N-20);
- checking (N-41, S-25, N-31) validity of the access credentials received at the service network (N-40);
- establishing (N-41, S-26, N-42) a valid session with the user (N-10) upon successful validity check of the access credentials;
- assigning at the service network (N-41, S-26, N-42) an internal IP address for the user (N-10) to identify the user when accessing a service in the service network; and
- linking (N-41, S-26, N-42) session data, access credentials and the assigned internal IP address for the user (N-10) at an entity (N-41; N-42) of the service network (N-40);
- establishing a secure tunnel (S-24) between the user equipment side (N-10) and an entity (N-41) of the service network (N-40) through the access network (N-20) by using an outer IP address assigned by the access network for addressing the user, and by using as an inner IP address in the tunnelled traffic the internal IP address assigned to identify the user in the service network (N-40); and
- linking said access credentials with said inner IP address and with said secure tunnel at the user equipment side (N-10).

19. The method of claim 18, further comprising a step of generating service credentials (N-41, S-26, N-42) for authorizing the user to access a service in the service network (N-40).

20. The method of claim 19, wherein the step of generating service credentials includes a step of generating service credentials on a per service basis for the user upon service request.

21. The method of claim 18, wherein the step of checking (N-41; N-41, S-25, N-31) the validity of access credentials received from the user (N-10) at the service network (N-40) further includes a step of communicating (S-25) with an Authentication Server (N-31) of the home network (N-30), when said access credentials are not signed by a recognised authentication entity.

22. The method of claim 18, wherein the step of linking session data, access credentials and assigned internal IP address for the user (N-10) further includes a step of communicating (S-26) a first device named Secure Service Entry Point (N-41), in charge of the secure tunnel (S-24), with a second device named Single Sign On Server (N-42) where the step of linking takes places.

23. The method of claim 18, for use when the user (N-10) is accessing a local service (N-44; N-45), or an external service (N-51) in a network (N-50) different than the currently accessed service network (N-40), the method further comprising a step of checking (S-28, N-42; S-32, N-42) whether the user had been previously authenticated or not.

## Patentansprüche

1. Vorrichtung (N-41, N-42), eingerichtet zum Empfangen einer Einmalanmeldungs- bzw. Single-Sign-On-Dienstanfrage in einem Telekommunikationsdienstnetz (N-40) von einem Benutzer (N-10) über ein Zugangsnetz (N-20), das nicht befähigt ist, Datenursprungs-Authentifizierung bereitzustellen, wobei der Benutzer (N-10) als ein Ergebnis einer Authentifizierung durch ein Kernnetz (N-30) Zugriffsberechtigungsnachweise empfangen hat (S-23), die Vorrichtung umfassend:
- eine Einrichtung zum Empfangen (S-24) der Zugriffsberechtigungsnachweise von dem Benutzer (N-10) durch das Zugangsnetz (N-20);
- eine Einrichtung zum Prüfen (N-41; S25, N-31) der Gültigkeit der von dem Benutzer (N-10) empfangenen Zugriffsberechtigungsnachweise;
- eine Einrichtung zum Einrichten einer gültigen Sitzung mit dem Benutzer (N-10) auf die erfolgreiche Gültigkeitsprüfung der Zugriffsberechtigungsnachweise hin;
- eine Einrichtung zum Zuweisen einer internen IP-Adresse zum Identifizieren des Benutzers im Dienstnetz (N-40); und
- eine Einrichtung zum Verknüpfen (N-41, S-26, N-42) von Sitzungsdaten, Zugriffsberechtigungsnachweisen und einer zugewiesenen internen IP-Adresse für den Benutzer (N-10);
- eine Einrichtung zum Einrichten eines sicheren Tunnels (S-24) mit dem Benutzer (N-10) beim Empfangen der Zugriffsberechtigungsnachweise über das Zugangsnetz (N-20) durch Verwenden einer äußeren IP-Adresse, die dem Benutzer durch das Zugangsnetz für das Adressieren des Benutzers zugewiesen worden ist, und durch Verwenden der internen IP-Adresse, die zum Identifizieren des Benutzers im Dienstnetz (N-40) als eine innere IP-Adresse in dem getunnelten Verkehr zugewiesen ist.

2. Vorrichtung nach Anspruch 1, ferner eine Einrichtung umfassend zum Erzeugen von Dienstberechtigungsnachweisen (N-41, S-26, N-42) zum Autorisieren des Benutzers, auf einen Dienst in dem Dienstnetz (N-40) zuzugreifen.

3. Vorrichtung nach Anspruch 2, wobei die Dienstberechtigungsnachweise auf einer pro Dienst-Basis für den Benutzer auf eine Dienstanfrage hin erzeugt werden (N-41, S-26, N-42).

4. Vorrichtung nach Anspruch 1, ferner eine Einrichtung umfassend zum Kommunizieren (S-25) mit einem Authentifizierungsserver (N-31) des Heimat-Netzes (N-30), um die Gültigkeit der von dem Benutzer (N-10) erhaltenen Zugriffsberechtigungsnachweise zu prüfen, wenn die Zugriffsberechtigungsnachweise nicht durch eine erkannte Authentifizierungseinheit (N-31) signiert sind.

5. Vorrichtung nach Anspruch 1, wobei die Einrichtung zum Einrichten des sicheren Tunnels (S-24) mit dem Benutzer (N-10) in einer ersten, Sicher-Dienstzugangspunkt bzw. Secure-Service-Entry-Point (N-41) genannten Einrichtung eingeschlossen ist und die Vorrichtung zum Verknüpfen von Sitzungsdaten, Zugriffsberechtigungsnachweisen und einer zugeordneten internen IP-Adresse für den Benutzer (N-10) in einer zweiten Einrichtung eingeschlossen sind, die Single-Sign-On-Server genannt wird (N-42).

6. Vorrichtung nach Anspruch 5, ferner eine Einrichtung umfassend für eine Kommunikation (S-26) zwischen dem Sicher-Dienstzugangspunkt bzw. Secure-Service-Entry-Point (N-41) und dem Single-Sign-On-Server (N-42).

7. Vorrichtung nach Anspruch 1, ferner eine Einrichtung umfassend für eine zusätzliche Koordination (S-25) zwischen der Vorrichtung (N-41; N-42) und einem Identitätsbereitsteller (N-31), der für den Benutzer in einem Heimatnetz (N-30) zuständig ist, wenn das Heimatnetz sich von dem Dienstnetz (N-40) unterscheidet, für das die Vorrichtung der Zugangspunkt ist.

8. Vorrichtung nach Anspruch 1 zur Verwendung, wenn der Benutzer (N-10) auf einen lokalen HTTP-Dienst (N-44) oder einen externer Dienst (N-51) in einem Netz (N-50) zugreift, das sich von dem Netz, auf das derzeit zugegriffen wird (N-40) unterscheidet, wobei die Vorrichtung eine Einrichtung hat zum Prüfen (N-41, S-30, N-43, S-28, N-42), ob der Benutzer zuvor authentifiziert worden ist oder nicht.

9. Vorrichtung nach Anspruch 8 mit einer Einrichtung (S-30, S-28) zum Kommunizieren mit einer Zwischeneinheit (N-43), die eingerichtet ist zum Abhören des Benutzerzugriffs (S-29) auf den HTTP-Lokaldienst (N-44) oder auf den externen Dienst (N-51) in einem externen Netz (N-50).

10. Vorrichtung nach Anspruch 9, wobei die Zwischeneinheit (N-43) ein HTTP-Proxy ist.

11. Vorrichtung nach Anspruch 9, wobei die Zwischeneinheit (N-43) eine Firewall ist.

12. Vorrichtung nach Anspruch 1 zur Verwendung, wenn der Benutzer (N-10) auf einen Nicht-HTTP-Lokaldienst (N-45) zugreift, mit einer Einrichtung zum Prüfen (N-41, S-31, N-45, S-32, N-42), ob der Benutzer zuvor authentifiziert worden ist oder nicht.

13. Vorrichtung nach Anspruch 1, wobei die Einrichtung zum Empfangen von Zugriffsberechtigungsnachweisen eine Einrichtung umfasst zum prüfen, ob ein digitales Zertifikat, das durch das Kernnetz ausgegeben worden ist, vorliegt zum Angeben einer erfolgreichen Authentifizierung des Benutzers.

14. Benutzerausrüstung (N-10; N-11), eingerichtet zum Ausführen einer Authentifizierungsprozedur mit einem Kernnetz (N-30), und eingerichtet zum Zugreifen auf ein Telekommunikationsdienstnetz (N-40) über ein Zugangsnetz (N-20), das nicht imstande ist, Datenursprungsort-Identifizierung bereitzustellen, wobei die Benutzerausrüstung (N-10, N-11) umfasst:
- eine Einrichtung zum Erhalten (S-23) von Zugriffsberechtigungsnachweisen als ein Ergebnis des Authentifiziertwerdens durch das Kernnetz (N-30);
- eine Einrichtung zum Senden (S-24) der Zugriffsberechtigungsnachweise in Richtung des Dienstnetzes (N-40), wenn über das Zugangsnetz (N-20) zugegriffen wird;
- eine Einrichtung zum Einrichten eines sicheren Tunnels (S-24) mit dem Dienstnetz (N-40) über das Zugangsnetz (N-20), wobei der sichere Tunnel eine äußere IP-Adresse verwendet, die dem Benutzer durch das Zugangsnetz zum Adressieren des Benutzers zugewiesen ist;
- eine Einrichtung zum Empfangen (S-24) einer internen IP-Adresse, die dem Dienstnetz (N-40) zugewiesen ist und die als innere IP-Adresse innerhalb des getunnelten Verkehrs eingeschlossen ist zum Identifizieren des Benutzers im Dienstnetz; und
- eine Einrichtung zum Verknüpfen der Zugriffsberechtigungsnachweise mit der inneren IP-Adresse und mit dem sicheren Tunnel.

15. Benutzerausrüstung (N-10; N-11) nach Anspruch 14, wobei die Einrichtung zum Erhalten von Zugriffsberechtigungsnachweisen einschließt:
- eine Einrichtung zum Empfangen einer Authentifizierungs-Hinterfragung von dem Kernnetz;
- eine Einrichtung zum Erzeugen und Zurückgeben einer Authentifizierungsantwort zu dem Kernnetz;
- eine Einrichtung zum Erzeugen eines Paars aus einem öffentlichen und einem privaten Schlüssel; und
- eine Einrichtung um dem Kernnetz den öffentlichen Schlüssel gemeinsam mit einer digitalen Signatur, die die Inhaberschaft des privaten Schlüssels bestätigt, zu unterbreiten.

16. Benutzerausrüstung (N-10; N-11) nach Anspruch 14, wobei die Einrichtung zum Erhalten von Zugriffsberechtigungsnachweisen einschließt:
- eine Einrichtung zum Empfangen einer Authentifizierungs-Hinterfragung von dem Kernnetz;
- eine Einrichtung zum Erzeugen und Zurückgeben einer Authentifizierungsantwort zu dem Kernnetz; und
- eine Einrichtung zum Anfordern eines von dem Kernnetz erhaltbaren digitalen Zertifikats.

17. Benutzerausrüstung (N-10; N-11) nach Anspruch 16, wobei die Einrichtung zum Erhalten von Zugriffsberechtigungsnachweisen ferner eine Einrichtung zum Erzeugen eines öffentlichen Schlüssels einschließt, für den das Digitalzertifikat erhaltbar ist.

18. Verfahren zum Unterstützen von Einmalanmeldungs- bzw. Single-Sign-On-Diensten in einem Telekommunikationsdienstnetz (N-40) für einen Benutzer (N-10), der auf das Dienstnetz (N-40) über ein Zugangsnetz (N-20) zugreift, welches nicht imstande ist, Datenursprungsort-Identifizierung bereitzustellen, wobei der Benutzer (N-10) Zugriffsberechtigungsnachweise als ein Ergebnis des Authentifiziertwerdens durch ein Kernnetz (N-30) empfangen hat (S-23), wobei das Verfahren die Schritte umfasst:
- Empfangen (S-24) der Zugriffsberechtigungsnachweise von dem Benutzer (N-10) durch das Zugangsnetz (N-20) bei dem Dienstnetz (N-40);
- Prüfen (N-41, S-25, N-31) der Gültigkeit der Zugriffsberechtigungsnachweise, die bei dem Dienstnetz (N-40) empfangen werden;
- Einrichten (N-41, S-26, N-42) einer gültigen Sitzung mit dem Benutzer (N-10) auf die erfolgreiche Gültigkeitsprüfung der Zugriffsberechtigungsnachweise;
- Zuweisen einer internen IP-Adresse für den Benutzer (N-10) bei dem Dienstnetz (N-41, S-26, N-42) zum Identifizieren des Benutzers, wenn er auf einen Dienst im Dienstnetz zugreift; und
- Verknüpfen (N-41, S-26, N-42) von Sitzungsdaten, Zugriffsberechtigungsnachweisen und der für den Benutzer (N-10) zugewiesenen internen IP-Adresse bei einer Einheit (N-41; N-42) des Dienstnetzes (N-40);
- Einrichten eines sicheren Tunnels (S-24) zwischen der Benutzerausrüstungsseite (N-10) und einer Einheit (N-41) des Dienstnetzes (N-40) über das Zugangsnetz (N-20) durch Verwenden einer äußere IP-Adresse, die von dem Zugangsnetz zum Adressieren des Benutzers zugewiesen worden ist, und durch Verwenden einer inneren IP-Adresse in dem getunnelten Verkehr, wobei die interne IP-Adresse zugewiesen ist zum Identifizieren des Benutzers im Dienstnetz (N-40); und
- Verknüpfen der Zugriffsberechtigungsnachweise mit der internen IP-Adresse und mit dem sicheren Tunnel auf der Benutzerausrüstungsseite (N-10).

19. Verfahren nach Anspruch 18, ferner einen Schritt umfassend des Erzeugens von Dienstberechtigungsnachweisen (N-41, S-26, N-42) zum Autorisieren des Benutzers, auf einen Dienst im Dienstnetz (N-40) zuzugreifen.

20. Verfahren nach Anspruch 19, wobei der Schritt des Erzeugens von Dienstberechtigungsnachweisen einen Schritt des Erzeugens von Dienstberechtigungsnachweisen auf einer pro-Dienst-Basis für den Benutzer auf eine Dienstanfrage hin einschließt.

21. Verfahren nach Anspruch 18, wobei der Schritt des Prüfens (N-41; N-41, S-25, N-31) der Gültigkeit von von dem Benutzer (N-10) bei dem Dienstnetz (N-40) empfangenen Zugriffsberechtigungsnachweisen ferner einen Schritt des Kommunizierens (S-25) mit einem Authentifizierungsserver (N-31) des Heimatnetzes (N-30) einschließt, wenn die Zugriffsberechtigungsnachweise nicht durch eine erkannte Authentifizierungseinheit signiert sind.

22. Verfahren nach Anspruch 18, wobei der Schritt des Verknüpfens von Sitzungsdaten, Zugriffsberechtigungsnachweisen und einer für den Benutzer (N-10) zugewiesenen internen IP-Adresse ferner einen Schritt einschließt des Kommunizierens (S-26) zwischen einer ersten, Sicher-Dienstzugangspunkt bzw. Secure-Service-Entry-Point (N-41) genannten Vorrichtung, die zuständig ist für den sicheren Tunnel (S-24), und einem zweiten Dienst, der Einmalanmeldungs- bzw. Single-Sign-On-Server (N-42) genannt wird, bei dem der Schritt des Verknüpfens stattfindet.

23. Verfahren nach Anspruch 18 zur Verwendung, wenn der Benutzer (N-10) auf einen lokalen Dienst (N-44; N-45), oder einen externen Dienst (N-51) in einem Netz (N-50) zugreift, das sich von dem Dienstnetz (N-40) unterscheidet, auf das derzeit zugegriffen wird, wobei das Verfahren ferner einen Schritt des Prüfens (S-28, N-42; S-32, N-42) umfasst, ob der Benutzer zuvor authentifiziert worden ist oder nicht.

## Revendications

1. Appareil (N-41, N-42) conçu pour recevoir une demande de service à Authentification Unique dans un réseau de services de télécommunications (N-40) d'un utilisateur (N-10) via un réseau d'accès (N-20) incapable d'assurer l'authentification d'une origine de données, l'utilisateur (N-10) ayant reçu (S-23) des autorisations d'accès comme résultat de son authentification par un coeur de réseau (N-30), l'appareil comprenant :
- un moyen pour recevoir (S-24) les autorisations d'accès de l'utilisateur (N-10) par l'intermédiaire du réseau d'accès (N-20) ;
- un moyen pour vérifier (N-41 ; S-25, N-31) la validité des autorisations d'accès reçues de l'utilisateur (N-10) ;
- un moyen pour établir une session valide avec l'utilisateur (N-10) en cas de réussite de la vérification de validité des autorisations d'accès ;
- un moyen pour affecter une adresse IP interne pour identifier l'utilisateur dans le réseau de services (N-40) ; et
- un moyen pour relier entre elles (N-41, S-26, N-42) des données de session, des autorisations d'accès et une adresse IP interne affectée pour l'utilisateur (N-10) ;
- un moyen pour établir un tunnel sécurisé (S-24) avec l'utilisateur (N-10) lors de la réception des autorisations d'accès par l'intermédiaire du réseau d'accès (N-20) en utilisant une adresse IP externe affectée à l'utilisateur par le réseau d'accès pour s'adresser à l'utilisateur, et en utilisant l'adresse IP interne affectée pour identifier l'utilisateur dans le réseau de services (N-40) en tant qu'adresse IP interne dans le trafic en tunnel.

2. Appareil selon la revendication 1, comprenant en outre un moyen pour générer des autorisations de services (N-41, S-26, N-42) pour autoriser l'utilisateur à accéder à un service dans le réseau de services (N-40).

3. Appareil selon la revendication 2, dans lequel les autorisations de services sont générées (N-41, S-26, N-42) service par service pour l'utilisateur lors d'une demande de service.

4. Appareil selon la revendication 1, comprenant en outre un moyen pour communiquer (S-25) avec un Serveur d'Authentification (N-31) du réseau de départ (N-30) pour vérifier la validité des autorisations d'accès reçues de l'utilisateur (N-10), lorsque lesdites autorisations d'accès ne sont pas signées par une entité d'authentification reconnue (N-31).

5. Appareil selon la revendication 1, dans lequel les moyens d'établissement du tunnel sécurisé (S-24) avec l'utilisateur (N-10) sont inclus dans un premier dispositif nommé Point d'Entrée de Service Sécurisé (N-41), et les moyens d'établissement d'un lien entre des données de session, des autorisations d'accès et une adresse IP interne affectée pour l'utilisateur (N-10) sont inclus dans un deuxième dispositif nommé serveur à Authentification Unique (N-42).

6. Appareil selon la revendication 5, comprenant en outre un moyen pour faire communiquer (S-26) le Point d'Entrée de Service Sécurisé (N-41) avec le Serveur à Authentification Unique (N-42).

7. Appareil selon la revendication 1, comprenant en outre un moyen pour une coordination supplémentaire (S-25) entre l'appareil (N-41 ; N-42) et un Fournisseur d'Identité (N-31) en charge dudit utilisateur dans un réseau de départ (N-30) lorsque ledit réseau de départ est différent du réseau de services (N-40) pour lequel l'appareil est le point d'entrée.

8. Appareil selon la revendication 1, destiné à être utilisé lorsque l'utilisateur (N-10) accède à un service local HTTP (N-44) ou à un service externe (N-51) dans un réseau (N-50) différent du réseau de services auquel un accès est effectué à l'instant courant (N-40), l'appareil ayant des moyens pour vérifier (N-41, S-30, N-43, S-28, N-42) si oui ou non l'utilisateur a déjà été authentifié.

9. Appareil selon la revendication 8, ayant des moyens (S-30, S-28) pour communiquer avec une entité intermédiaire (N-43) conçue pour intercepter l'accès de l'utilisateur (S-29) au service local HTTP (N-44), ou au service externe (N-51) dans un réseau externe (N-50).

10. Appareil selon la revendication 9, dans lequel l'entité intermédiaire (N-43) est un mandataire HTTP.

11. Appareil selon la revendication 9, dans lequel l'entité intermédiaire (N-43) est un pare-feu.

12. Appareil selon la revendication 1, destiné à être utilisé lorsque l'utilisateur (N-10) accède à un service local non HTTP (N-45), ayant des moyens pour vérifier (N-41, S-31, N-45, S-32, N-42) si oui ou non l'utilisateur a déjà été authentifié.

13. Appareil selon la revendication 1, dans lequel le moyen de réception d'autorisations d'accès comprend un moyen pour vérifier si un certificat numérique délivré par le coeur de réseau est présent pour indiquer une authentification réussie de l'utilisateur.

14. Équipement utilisateur (N-10 ; N-11) conçu pour effectuer une procédure d'authentification sur un coeur de réseau (N-30), et conçu pour accéder à un réseau de services de télécommunications (N-40) via un réseau d'accès (N-20) incapable d'assurer l'authentification d'une origine de données, l'équipement utilisateur (N-10 ; N-11) comprenant :
- un moyen pour obtenir (S-23) des autorisations d'accès comme résultat de son authentification par le coeur de réseau (N-30) ;
- un moyen pour envoyer (S-24) les autorisations d'accès au réseau de services (N-40) lors d'un accès par l'intermédiaire du réseau d'accès (N-20) ;
- un moyen pour établir un tunnel sécurisé (S-24) avec le réseau de services (N-40) par l'intermédiaire du réseau d'accès (N-20), le tunnel sécurisé utilisant une adresse IP externe affectée à l'utilisateur par le réseau d'accès pour s'adresser à l'utilisateur ;
- un moyen pour recevoir (S-24) une adresse IP interne affectée par le réseau de services (N-40) et incluse comme une adresse IP interne au sein du trafic en tunnel pour identifier l'utilisateur sur le réseau de services ; et
- un moyen pour relier lesdites autorisations d'accès à l'adresse IP interne et au tunnel sécurisé.

15. Équipement utilisateur (N-10 ; N-11) selon la revendication 14, dans lequel le moyen d'obtention d'autorisations d'accès comporte :
- un moyen pour recevoir un défi d'authentification du coeur de réseau ;
- un moyen pour générer et renvoyer une réponse d'authentification au coeur de réseau ;
- un moyen pour générer une paire de clés publique et privée ; et
- un moyen pour soumettre la clé publique en association avec une signature numérique prouvant la propriété de la clé privée au coeur de réseau.

16. Équipement utilisateur (N-10 ; N-11) selon la revendication 14, dans lequel le moyen d'obtention d'autorisations d'accès comporte :
- un moyen pour recevoir un défi d'authentification du coeur de réseau ;
- un moyen pour générer et renvoyer une réponse d'authentification au coeur de réseau ; et
- un moyen pour demander un certificat numérique pouvant être obtenu du coeur de réseau.

17. Équipement utilisateur (N-10 ; N-11) selon la revendication 16, dans lequel le moyen d'obtention d'autorisations d'accès comporte en outre un moyen pour générer une clé publique pour laquelle le certificat numérique peut être obtenu.

18. Procédé de prise en charge de services à Authentification Unique dans un réseau de services de télécommunications (N-40) pour un utilisateur (N-10) accédant audit réseau de services (N-40) par l'intermédiaire d'un réseau d'accès (N-20) incapable d'assurer l'authentification d'une origine de données, l'utilisateur (N-10) ayant reçu (S-23) des autorisations d'accès comme résultat de son authentification par un coeur de réseau (N-30), le procédé comprenant les étapes consistant à :
- recevoir (S-24) sur le réseau de services (N-40) les autorisations d'accès de l'utilisateur (N-10) par l'intermédiaire du réseau d'accès (N-20) ;
- vérifier (N-41, S-25, N-31) la validité des autorisations d'accès reçues sur le réseau de services (N-40) ;
- établir (N-41, S-26, N-42) une session valide avec l'utilisateur (N-10) lors d'une vérification de validité réussie des autorisations d'accès ;
- affecter sur le réseau de services (N-41 ; S-26, N-42) une adresse IP interne pour l'utilisateur (N-10) pour identifier l'utilisateur lors de l'accès à un service sur le réseau de services ; et
- relier (N-41 ; S-26, N-42) des données de session, des autorisations d'accès et l'adresse IP interne affectée pour l'utilisateur (N-10) sur une entité (N-41 ; N-42) du réseau de services (N-40) ;
- établir un tunnel sécurisé (S-24) entre le côté formant équipement utilisateur (N-10) et une entité (N-41) du réseau de services (N-40) par l'intermédiaire du réseau d'accès (N-20) en utilisant une adresse IP externe affectée par le réseau d'accès pour s'adresser à l'utilisateur, et en utilisant en tant qu'adresse IP interne dans le trafic en tunnel l'adresse IP interne affectée pour identifier l'utilisateur sur le réseau de services (N-40) ; et
- relier lesdites autorisations d'accès à ladite adresse IP interne et audit tunnel sécurisé du côté formant équipement utilisateur (N-10).

19. Procédé selon la revendication 18, comprenant en outre une étape consistant à générer des autorisations de services (N-41, S-26, N-42) pour autoriser l'utilisateur à accéder à un service sur le réseau de services (N-40).

20. Procédé selon la revendication 19, dans lequel l'étape consistant à générer des autorisations de services comprend une étape consistant à générer, service par service, des autorisations de services pour l'utilisateur lors d'une demande de service.

21. Procédé selon la revendication 18, dans lequel l'étape de vérification (N-41 ; N-41, S-25, N-31) de la validité des autorisations d'accès reçues de l'utilisateur (N-10) sur le réseau de services (N-40) comprend en outre une étape consistant à communiquer (S-25) avec un Serveur d'Authentification (N-31) du réseau de départ (N-30), lorsque lesdites autorisations d'accès ne sont pas signées par une entité d'authentification reconnue.

22. Procédé selon la revendication 18, dans lequel l'étape consistant à relier des données de session, des autorisations d'accès et une adresse IP interne affectée pour l'utilisateur (N-10) comprend en outre une étape consistant à faire communiquer (S-26) un premier dispositif nommé Point d'Entrée de Service Sécurisé (N-41) en charge du tunnel sécurisé (S-24) avec un deuxième dispositif nommé Serveur à Authentification Unique (N-42) sur lequel s'effectue l'étape d'établissement de lien.

23. Procédé selon la revendication 18, destiné à être utilisé lorsque l'utilisateur (N-10) accède à un service local (N-44 ; N-45) ou à un service externe (N-51) sur un réseau (N-50) différent du réseau de services auquel un accès est effectué à l'instant courant (N-40), le procédé comprenant en outre une étape consistant à vérifier (S-28, N-42 ; S-32, N-42) si oui ou non l'utilisateur a déjà été authentifié.
